(19) Europäisches Patentamt / European Patent Office / Office européen des brevets

(11) **EP 2 402 724 A1**

(12) **DEMANDE DE BREVET EUROPEEN**

(43) Date de publication:
**04.01.2012 Bulletin 2012/01**

(51) Int Cl.:
***G01G 23/01*** *(2006.01)*

(21) Numéro de dépôt: **11305806.9**

(22) Date de dépôt: **24.06.2011**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **02.07.2010 FR 1055373**

(71) Demandeur: **SEB S.A.**
**69130 Ecully (FR)**

(72) Inventeurs:
• **Linglin, Benoît**
**74350 Cruseilles (FR)**
• **Anthoine-Milhomme, Didier**
**73410 Albens (FR)**

(74) Mandataire: **Guéry-Jacques, Géraldine**
**SEB Développement**
**Les 4 M - Chemin du Petit Bois**
**B.P. 172**
**69134 Ecully Cedex (FR)**

(54) **Procédé d'étalonnage d'un capteur de poids, capteur de poids pour la mise en oeuvre de ce procédé et appareil électronique de pesée**

(57) L'invention concerne un procédé d'étalonnage d'un capteur de poids (4) comprenant un corps d'épreuve de forme allongée équipé d'exclusivement deux ou trois jauges extensométriques résistives de mesure de la déformation du corps d'épreuve, comprenant les étapes suivantes :
- mesure à vide de la valeur de la résistance électrique de chaque jauge extensométrique résistive du capteur en fonction du temps de charge ou décharge d'un condensateur de capacité connue au travers de la jauge extensométrique mesurée,
- une application d'une charge étalon au capteur de poids (4),
- mesure, sous charge étalon, de la valeur de la résistance électrique de chaque jauge extensométrique résistive du capteur en fonction du temps de charge ou décharge d'un condensateur de capacité connue au travers de la jauge extensométrique mesurée,
- détermination, en fonction des mesures des résistances électriques à vide et sous charge étalon, des coefficients d'une loi de variation de la valeur de la résistance électrique de chaque jauge extensométrique en fonction du poids appliqué et/ou des coefficients d'une loi de détermination du poids en fonction de la valeur de la résistance électrique de chaque jauge extensométrique résistive.

FIG.4

EP 2 402 724 A1

## Description

La présente invention concerne le domaine technique des appareils électroniques de pesée et notamment mais non exclusivement le domaine des balances ménagères utilisées en cuisine ou encore utilisées comme pèse-personne.

Un appareil électronique de pesée comprend généralement, dans le domaine des balances ménagères comme décrit par la demande WO2008/009794 de la demanderesse, un plateau destiné à recevoir la charge à peser et un socle destiné à reposer sur un support tel que le sol dans le cas d'un pèse personne ou, pour une balance de cuisine, un dessus de table ou de meuble. L'appareil électronique de pesée comprend en outre au moins un et, généralement, entre trois et quatre capteurs de poids qui sont interposés entre le plateau et le socle et qui sont raccordés électriquement à une unité électronique de mesure adaptée pour déterminer en fonction des informations fournies par les capteurs la valeur de la masse ou du poids de la charge appliquée sur le plateau. L'unité électronique de mesure comprend alors un afficheur permettant à l'utilisateur de l'appareil de mesure de lire la valeur mesurée.

EP0153121 divulgue un procédé d'étalonnage d'un capteur de poids comprenant un corps d'épreuve de forme allongée équipé de quatre jauges extensométriques résistives de mesure de la déformation du corps d'épreuve. Le procédé comprend les étapes de mesure à vide de la valeur de la résistance électrique de chacune des quatre jauges ; puis application d'une charge étalon au capteur de poids ; puis mesure, sous charge étalon, de la valeur de la résistance électrique de chacune des 4 jauges par un pont de Wheastone complet; et détermination, avec ces mesures, des coefficients d'une loi de variation de la valeur de la résistance électrique de chaque jauge extensométrique en fonction du poids appliqué. Les mesures de résistance se font par mesure de tensions via le pont de Wheatstone, de ce fait la mesure individuelle de chaque résistance est impossible.

D'une façon similaire au document précédent, EP0295067 décrit la mesure, par différentes charges étalons appliquées, des valeurs resistives de 4 jauges extensométriques d'un capteur de force via un pont complet de Wheastone. Les mesures de résistance se font par mesure de tensions via le pont de Wheatstone, de ce fait la mesure individuelle de chaque résistance est impossible.

Enfin, il est connu de US20030030451 un procédé de mesure de résistance électrique à partir d'un condensateur dans lequel la mesure repose sur le temps de charge et de décharge dudit condensateur.

Les capteurs utilisés dans la présente invention ne sont pas les mêmes que dans les documents précédemment décrits. En effet ,les capteurs de la présente invention sont généralement du type à jauge extensométrique résistive et comprennent, le plus souvent, un corps d'épreuve allongé et équipé d'exclusivement deux ou trois jauges extensométriques résistives adaptées pour mesurer les déformations du corps d'épreuve selon un axe longitudinal de ce dernier.

Les jauges extensométriques sont alors associées à des moyens de raccordement de manière à définir un demi-pont de Wheastone (et non un pont complet) qui est raccordé à l'unité électronique de mesure.

La mise en oeuvre de capteurs de poids à deux jauges extensométriques résistives utilisés en tant que demi-pont de Wheastone impose de procéder à un étalonnage de la balance après son assemblage en raison de la sensibilité des mesures à la position de la charge sur le plateau. En effet, selon la position de cette charge le moment exercé par cette dernière varie. De plus la position de la charge est susceptible d'induire une certaine torsion des corps d'épreuve des capteurs de poids situés aux quatre coins du plateau ce qui peut influencer la qualité de la mesure.

Or, l'étalonnage est actuellement effectué en fin de ligne de montage sur produit fini. Cet étalonnage est entièrement automatisé mais ralentit les cadences de fabrication.

Il est donc apparu le besoin de perfectionner cette étape d'étalonnage afin de rendre ces capteurs plus robustes d'un point de vue métrologique en compensant la sensibilité de ces capteurs aux variations de moments mécaniques qu'ils pourraient subir. Tout ceci en visant une étape d'étalonnage en fabrication la moins longue possible.

Afin d'atteindre cet objectif, l'invention concerne un procédé d'étalonnage d'un capteur de poids comprenant un corps d'épreuve de forme allongée équipé d'exclusivement deux ou trois jauges extensométriques résistives de mesure de la déformation du corps d'épreuve, procédé caractérisé en ce qu'il comprend les étapes suivantes :

- mesure à vide de la valeur de la résistance électrique de chaque jauge extensométrique résistive du capteur en fonction du temps de charge ou décharge d'un condensateur de capacité connue au travers de la jauge extensométrique mesurée,

- une application d'une charge étalon au capteur de poids,

- mesure, sous charge étalon, de la valeur de la résistance électrique de chaque jauge extensométrique résistive du capteur en fonction du temps de charge ou décharge d'un condensateur de capacité connue au travers de la jauge extensométrique mesurée,

- détermination, en fonction des mesures des résistances électriques à vide et sous charge étalon, des coefficients d'une loi de variation de la valeur de la résistance électrique de chaque jauge extensométrique en fonction du poids appliqué et/ou des coefficients d'une loi de détermination du poids en fonction de la valeur de la résistance électrique de chaque jauge extensométrique résistive.

La mesure de la résistance électrique de chaque jauge extensométrique résistive par détermination du temps de charge ou de décharge d'un condensateur de capacité connue au travers de la jauge extensométrique est réalisée conformément à un procédé décrit par les brevets EP 1 251 357, US2003030451 et US 6 690 183 également appelé mesure TDC ci-après.

Il est connu que cette mesure TDC permet d'avoir une sensibilité de mesure plus importante. Néanmoins l'usage de ce système de conversion sur un demi-pont pour faire une analyse, en valeurs ohmiques, de variations extrêmement faibles de deux ou trois jauges de contraintes afin de retrouver un moment est tout à fait nouveau. En effet il a été constaté qu'il n'est plus nécessaire de mettre en oeuvre des montages en pont complet de Wheastone intégrant un demi pont de référence déporté sur la partie électronique de traitement. Il est innovant d'utiliser ce système de conversion pour mesurer la résistance électrique dans un capteur à 2 ou 3 jauges extensométriques car la mesure ne se fait que sur un demi-pont et non un pont complet, car le temps de cycle est extrêmement rapide, car dans l'alternance d'un cycle de charge décharge du condensateur de mesure il est possible de traiter les deux jauges d'un demi pont ce qui permet de s'affranchir des dérives. L'usage de ce système permet d'accéder directement à la valeur ohmique pour connaitre la variation de résistance de chaque jauge, sans passer par une mesure en volts.

Selon une forme de mise en oeuvre, le procédé d'étalonnage conforme à l'invention comprend les étapes suivantes :

- une première application d'une charge étalon en un premier point connu du capteur de poids,

- une mesure, sous charge étalon au premier point, de la valeur de la résistance électrique de chaque jauge extensométrique résistive du capteur en fonction du temps de charge ou décharge d'un condensateur de capacité connue au travers de la jauge extensométrique mesurée,

- une deuxième application d'une charge étalon en un deuxième point connu du capteur de poids,

- une mesure, sous charge étalon au deuxième point, de la valeur de la résistance électrique de chaque jauge extensométrique résistive du capteur en fonction du temps de charge ou décharge d'un condensateur de capacité connue au travers de la jauge extensométrique mesurée.

La mise en oeuvre de deux applications d'une charge étalon en deux points du capteur permet de déterminer les coefficients a,b,c d'une loi de variation linéaire du type $R=a+bP+cPx$ où $R$ est la résistance mesurée et $x$ est la position de la projection du point d'application de P sur un axe tel que par exemple l'axe longitudinal du corps d'épreuve. P est la force à mesurer et P.X est le moment induit par la force P suivant l'axe X. Ainsi, il est possible d'obtenir une bonne précision de mesure et de s'affranchir des erreurs dites axiales. La précision de mesure n'en sera que meilleure.

Selon une variante de cette forme de mise en oeuvre, le procédé d'étalonnage conforme à l'invention comprend, en outre, les étapes suivantes :

- une troisième application d'une charge étalon en un troisième point connu du capteur de poids,

- une mesure, sous charge étalon au troisième point, de la valeur de la résistance électrique de chaque jauge extensométrique résistive du capteur en fonction du temps de charge ou décharge d'un condensateur de capacité connue au travers de la jauge extensométrique mesurée.

La mise en oeuvre de trois applications d'une charge étalon en deux points supplémentaires du capteur, soit quatre mesures au total en intégrant l'étape de mesure à vide, permet de déterminer l'influence de la torsion du capteur sur les mesures et notamment les coefficients d'une loi de variation linéaire associée à une troisième jauge résistive mesurant les déformations du corps d'épreuve selon une direction non parallèle à l'axe longitudinal. La loi de variation associée à cette troisième jauge résistive pourra alors être du type $R=a+bP+cPx+dPy$ où $R$ est la résistance mesurée et Y la projection du point d'application de P le long d'un axe sécant à l'axe longitudinal $\Delta$ et, par exemple, perpendiculaire à l'axe $\Delta$. Ainsi, il est possible d'obtenir une bonne précision de mesure et de s'affranchir à la fois des erreurs axiales et les erreurs dues à la torsion du corps d'épreuve.

Selon une caractéristique de l'invention visant à faciliter la mise en oeuvre du procédé d'étalonnage, chaque application d'une charge étalon est effectuée en un point associé à des moyens d'identification incorporés au capteur de poids.

Selon une autre caractéristique de l'invention, le procédé comprend une étape d'enregistrement des coefficients déterminés en relation avec le capteur étalonné.

L'invention concerne également un capteur de poids plus particulièrement adapté à la mise en oeuvre du procédé d'étalonnage selon l'invention. Un tel capteur de poids comprend :

- un corps d'épreuve de forme allongée équipé d'exclusivement deux ou trois jauges extensométriques résistives de mesure de la déformation du corps d'épreuve,

- et des moyens de raccordement électrique de chaque jauge extensométrique à une unité électronique de mesure.

Selon l'invention ce capteur de poids est caractérisé en ce qu'il comprend des moyens d'identification d'au moins un point d'application d'une charge étalon dans le cadre d'un processus d'étalonnage du capteur visant à déterminer des caractéristiques de chaque jauge extensométrique.

Selon une caractéristique plus particulière de l'invention, le corps d'épreuve peut être équipé d'au moins deux jauges extensométriques résistives de mesure de la déformation du corps d'épreuve.

Selon une caractéristique de l'invention, le capteur de poids comprend des moyens d'identification de deux points distincts d'application d'une charge étalon.

Selon l'invention, les moyens d'identification du ou des points d'application d'une charge étalon peuvent être réalisés de toutes manières appropriées et, par exemple, sous la forme d'un repérage graphique ou d'un repère tridimensionnel ou encore de la combinaison des deux. Selon une caractéristique de l'invention, les moyens d'identification comprennent pour chaque point d'application au moins une cavité ou présentent un repérage graphique aménagé dans ou sur le corps du capteur. Une telle cavité et/ou tout repérage graphique et/ou tout autre type de marquage est alors particulièrement adapté, la cavité permettant par exemple de recevoir l'extrémité d'un organe d'application de la charge étalon.

Selon encore une forme de réalisation de l'invention, le capteur comprend au moins une jauge extensométrique résistive de mesure de la déformation du corps d'épreuve selon une direction de mesure parallèle à un axe longitudinal du corps d'épreuve.

Selon une variante de cette forme de réalisation, le capteur de poids comprend au moins deux jauges extensométriques résistives de mesure de la déformation du corps d'épreuve selon une direction de mesure parallèle à l'axe longitudinal du corps d'épreuve.

Selon une autre variante de cette forme de réalisation, le capteur de poids comprend au moins une jauge extensométrique résistive de mesure de la déformation du corps d'épreuve selon une deuxième direction de mesure non parallèle à l'axe longitudinal du corps d'épreuve. La mesure des déformations du corps d'épreuve selon une deuxième direction permet d'effectuer une correction des erreurs qui pourraient être induites par une torsion du corps d'épreuve.

Selon une caractéristique de l'invention, le capteur de poids comprend des moyens de fourniture de coefficients de mesure déterminés par le procédé d'étalonnage conforme à l'invention. Ces coefficients sont alors enregistrés dans la mémoire interne de l'appareil de pesée, permettant une compensation dynamique des erreurs de mesures.

L'invention concerne également un appareil électronique de pesée comprenant :

- au moins un plateau de mesure,

- au moins un socle,

- une unité électronique de mesure,

- au moins trois capteurs de force incluant deux ou trois jauges extensométriques résistives qui sont interposés entre le plateau de mesure et le socle et qui sont équipés de moyen de raccordement électrique des jauges extensométriques à l'unité électronique de mesure.

Selon l'invention cet appareil électronique de pesée est caractérisé en ce que chaque capteur de force est constitué par un capteur de poids conforme à l'invention et en ce que l'unité électronique de mesure est adaptée pour :

- déterminer la valeur de la résistance électrique de chacune des jauges extensométriques des capteurs en fonction du temps de charge ou décharge d'un condensateur, de capacité connue, au travers des jauges extensométriques,

- et pour déterminer en fonction des valeurs de résistance déterminées la valeur de la charge appliquée sur le plateau de mesure.

Selon une caractéristique de l'invention, l'unité électronique de mesure est adaptée pour mesurer la résistance de chaque jauge extensométrique de chaque capteur de poids indépendamment des résistances des autres jauges extensométriques.

Selon une autre caractéristique de l'invention l'unité électronique de mesure comprend au moins une unité de mémoire adaptée pour enregistrer les coefficients de mesure de chaque jauge extensométrique de chaque capteur de poids déterminés dans le cadre du procédé conforme à l'invention.

Bien entendu les différentes caractéristiques, variantes et formes de réalisation et de mise en oeuvre du procédé, du capteur de poids et de l'appareil électronique de pesée conforme à l'invention peuvent être associées les unes avec les autres selon diverses combinaisons dans la mesure où elles ne sont pas incompatibles ou exclusives les unes des autres.

Par ailleurs, diverses autres caractéristiques de l'invention ressortent de la description annexée effectuée en référence aux dessins qui illustrent une forme non limitative de réalisation d'un appareil électronique de pesée, d'un capteur de poids et d'un dispositif pour la mise en oeuvre du procédé d'étalonnage conforme à l'invention.

- La figure 1 est une perspective schématique éclatée d'un appareil électronique de pesée selon l'invention.

- La figure 2 est une perspective schématique d'un capteur de poids selon l'invention.

- Les figures 3 et 4 sont des perspectives schématiques montrant deux étapes du procédé d'étalonnage selon l'invention du capteur de poids illustré à la figure 2.

- La figure 5 est une perspective schématique d'une variante de réalisation d'un capteur de poids selon l'invention.

- La figure 6 est un schéma de circuit de mesure appliqué à 2 jauges d'un même capteur selon l'invention.

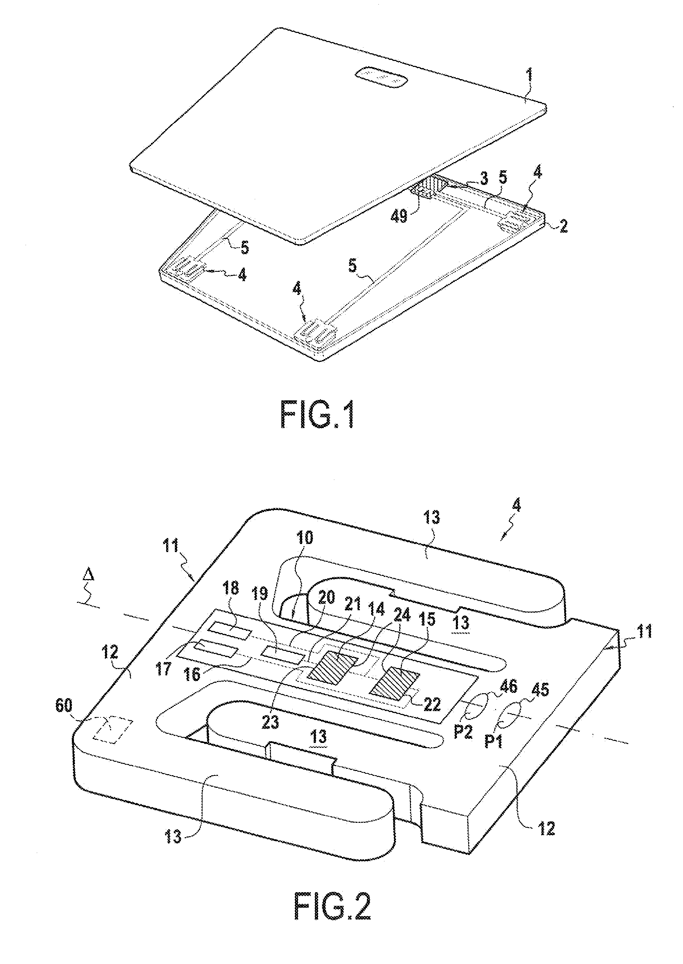

Un appareil électronique de pesée selon l'invention comprend, par exemple et comme le montre la figure 1, au moins un plateau de mesure 1 et au moins un socle 2. Selon l'exemple illustré, l'appareil électronique de pesée comprend un seul plateau 1 et un seul socle 2 qui définissent un boîtier à l'intérieur duquel est disposé une unité électronique de mesure 3 et quatre capteurs de force 4 dont seuls trois sont visibles à la figure 1. Les capteurs de force 4 sont reliés à l'unité électronique de mesures 3 par des moyens de raccordement 5 tel que des câbles électriques.

Chaque capteur de force 4 est dans le cas présent formé par un capteur de poids qui comprend comme le montre la figure 2, un corps d'épreuve allongé 10 de forme générale parallélépipédique s'étendant selon un axe longitudinal Δ. Le corps d'épreuve 10 est prolongé à chacune de ses extrémités par une embase 11 d'application des forces à mesurer. Chaque embase 11 présente la forme générale d'un U dont l'âme 12 est solidaire du corps d'épreuve 10 et les branches 13 s'étendent de part et d'autre du corps d'épreuve 10 en étant parallèles à ce dernier. Le corps d'épreuve 10 comprend sur l'une de ces faces, ici sa face supérieure, au moins une et, selon l'exemple illustré, deux jauges extensométriques résistives 14,15 de mesure de la déformation du corps d'épreuve 10 selon une direction parallèle à l'axe longitudinal Δ. Le capteur 4 comprend également des moyens pour le raccordement électrique de chaque jauge extensométrique 14,15 à l'unité électronique de mesure 3. Dans le cas présent les moyens de raccordement comprennent, d'une part, une ligne de masse 16 reliant un pôle de chaque jauge 14,15 à un contact de masse 17, et, d'autre part, deux contacts polaires 18, 19 reliés chacun par une ligne correspondante 20, 21 à un pôle 22,23 distinct du pôle de masse 24 de chaque jauge extensométrique 14,15. Le câblage des moyens de raccordement correspond à celui d'un demi-pont de Wheastone. Il doit être remarqué que le mode général de réalisation d'un tel appareil électronique de pesée et de ses capteurs de poids est bien connu de l'homme du métier et se trouve notamment exposé à la demande WO2008/00 9794 de sorte qu'il n'est pas nécessaire de le décrire ici plus longuement.

L'appareil électronique de pesée selon l'invention se distingue toutefois de celui décrit à la demande WO2008/00 9794 précitée en ce que la détermination de la charge du plateau de mesure 1 ne s'effectue pas par mesure de la variation de résistance d'un demi pont de Wheastone mais par la mesure directe de la résistance électrique de chaque jauge extensométrique 14,15 de chaque capteur 4. L'unité électronique de mesure 3 est donc adaptée pour mesurer la résistance électrique de chaque jauge extensométrique résistive 14,15 de chaque capteur en fonction du temps de charge ou décharge d'un condensateur de capacité connue au travers de ladite jauge extensométrique, conformément à un procédé de mesure TDC décrit par les brevets EP 1 251 357 et US 6 690 183.

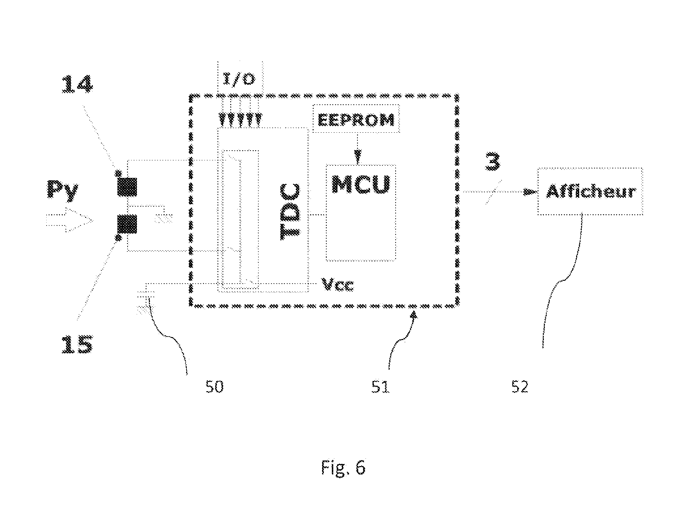

La mise en oeuvre d'un tel mode de mesure TDC présente l'avantage de permettre d'utiliser des capteurs de poids existant à deux jauges extensométriques résistives montées en demi-pont de Wheastone. Ce montage est illustré en figure 6 où Py représente le poids appliqué au capteur muni de deux jauges 14 et 15 qui forment un demi-pont de Wheastone. Le condensateur de mesure 50 est connecté via un mécanisme commandé d'interrupteurs afin de mesurer la première jauge comme la deuxième jauge. Aux bornes des deux jauges 14 et 15 est relié la puce (ASIC) 51 comprenant le circuit TDC, l'unité de contrôle MCU et l'EEPROM pour mémoriser les valeurs mesurées. L'ASIC 51 est relié à un afficheur 52.

La compensation permet d'augmenter la précision de mesure. En effet, dans le cadre de cette méthode de mesure de poids, telle que mise en oeuvre notamment par l'appareil de pesée de la demande WO2008/009794, les deux jauges extensométriques résistives, constitutives du demi-pont de Wheastone, forment vis-à-vis de l'unité électronique de mesure un unique transducteur de détection de la déformation du corps d'épreuve. Afin d'obtenir, une bonne qualité de mesures il est alors nécessaire de procéder à un étalonnage de l'appareil de mesure après son assemblage pour connaître l'influence de la position d'application de la charge mesurée sur le plateau et corriger les erreurs dites axiales.

Les inventeurs ont eu le mérite de mettre en évidence que la technologie de mesure par Temps de Décharge dans un Condensateur, dite mesure TDC, permet pour un coût de capteur identique d'obtenir une plus grande précision de mesure en utilisant chaque jauge extensométrique comme un transducteur indépendant alors que jusqu'à présent elles étaient vues comme un même transducteur. Ainsi, il est possible de corriger au niveau de chaque capteur de poids les erreurs axiales induites par la variation, d'une mesure à l'autre, de la projection sur l'axe Δ du point d'application de la charge à mesurer.

L'invention propose également de s'affranchir de l'étalonnage de chaque appareil électronique de pesée en cours de montage pour procéder à un étalonnage individuel de chacun des capteurs de poids bien avant le montage de l'appareil de pesée.

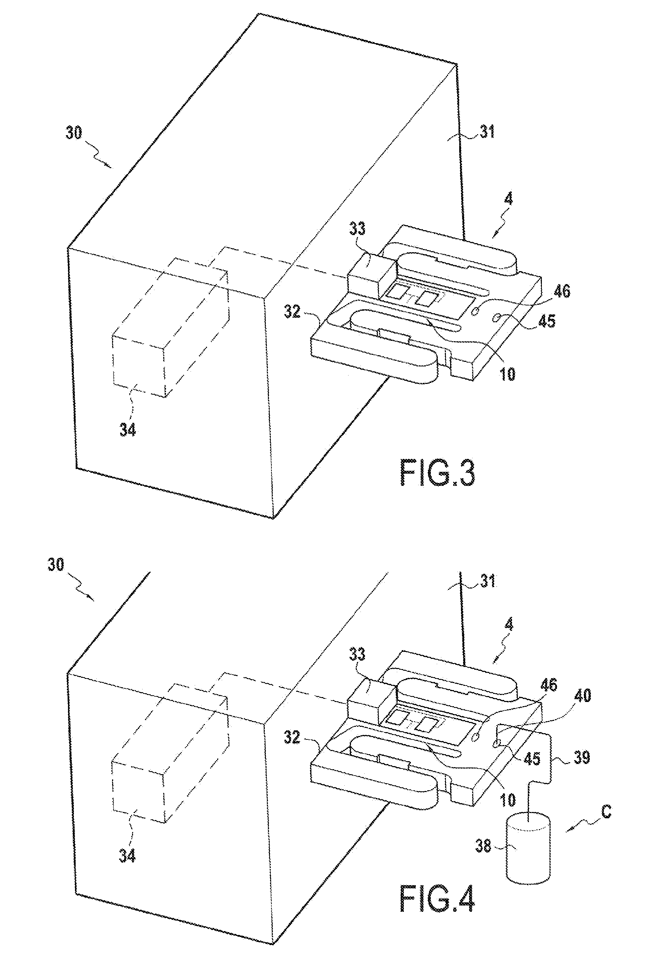

À cet effet, chaque capteur de poids 4 peut être placé dans un dispositif d'étalonnage 30 tel qu'illustré à la figure 3. Selon cet exemple, le dispositif 30 comprend une tête de mesure 31 pourvue d'une fente 32 destinée à recevoir l'âme 12 d'une des embases du capteur 4 tandis que l'autre embase est libre de sorte que le corps d'épreuve 10 se trouve monté en porte-à-faux sur la tête de mesure 31. Le dispositif d'étalonnage 30 comprend en outre une tête de contact 33 destinée à assurer le raccordement électrique des contacts de masse 17 et polaires 18, 19 à une unité électronique d'étalonnage 34 adaptée pour mesurer, selon le procédé TDC, la résistance électrique de chacune des jauges extensométriques 14,15 du capteur de poids 4. L'unité électronique d'étalonnage 34 est en outre adaptée pour mettre en oeuvre le procédé d'étalonnage conforme à l'invention de la manière suivante.

Tout d'abord, il est procédé à une mesure à vide de la valeur de la résistance électrique de chaque jauge extensométrique résistive et il est ainsi obtenu des valeurs R14(0;0) et R15(0;0).

Ensuite, il est appliqué, comme le montre la figure 4 une charge étalon C au capteur de poids 4 en un point connu P1 de ce dernier. Selon l'exemple illustré la charge étalon est constituée par un ensemble dont la masse est connue comprenant un corps 38 solidaire d'un crochet 39 en col de cygne. Le crochet 39 comprend dans l'alignement du corps 38 une pointe d'accrochage 40 destinée à appliquer le poids de la charge étalon C au capteur de poids 4.

Afin de faciliter le positionnement de la charge étalon C, le capteur 4 comprend des moyens 45 d'identification du point d'application P1 qui selon l'exemple illustré comprennent une cavité aménagée dans le capteur 4 et selon l'exemple illustré au niveau de l'âme 12 de l'embase 11 située à l'opposé des contacts 17 à 19. La cavité 45 est donc adaptée pour recevoir la pointe d'accrochage 40 de la charge C. Dans le cas présent la cavité 45 et donc le point d'application P1 correspondant se trouvent placés sur l'axe longitudinal Δ.

Une fois la charge étalon C positionnée, l'unité 34 procède à la mesure sous charge étalon au point P1 de la résistance électrique de chaque jauge extensométrique résistive 14, 15 et il est ainsi obtenu des valeurs R14(C;P1) et R15(C;P1).

Il est ensuite procédé à une deuxième mesure sous charge étalon positionnée en un deuxième point P2 du capteur identifié par une cavité 46 placée également sur l'axe longitudinal Δ à distance de la cavité 45. Il est ainsi obtenu les valeurs R14(C;P2) et R15(C;P2).

En partant de l'hypothèse que la valeur de la résistance électrique de chaque jauge extensométrique répond à une loi du type :

$$R(p;x) = a + bp + cpx$$

où :

- p est la charge appliquée

- x est la projection sur l'axe Δ du point d'application de la charge

- P.x est le moment de la force P suivant l'axe longitudinal Δ

il est obtenu pour chaque jauge extensométrique un système de trois équations à trois inconnus que l'unité électronique d'étalonnage va résoudre au moyen des règles du calcul matriciel bien connu de l'homme du métier. À partir de la connaissance des coefficients a, b, c il sera alors possible de calculer toujours selon les règles de calcul matriciel et pour chaque jauge extensométrique les coefficients d'une loi de détermination du poids en fonction de la valeur de la résistance électrique de chaque jauge extensométrique résistive, ainsi que le moment P.x.

Après l'étalonnage des capteurs de poids et le montage de l'appareil électronique de pesée, les valeurs des coefficients de mesure seront enregistrées dans une unité de mémoire 49 de l'unité électronique de mesure 3.

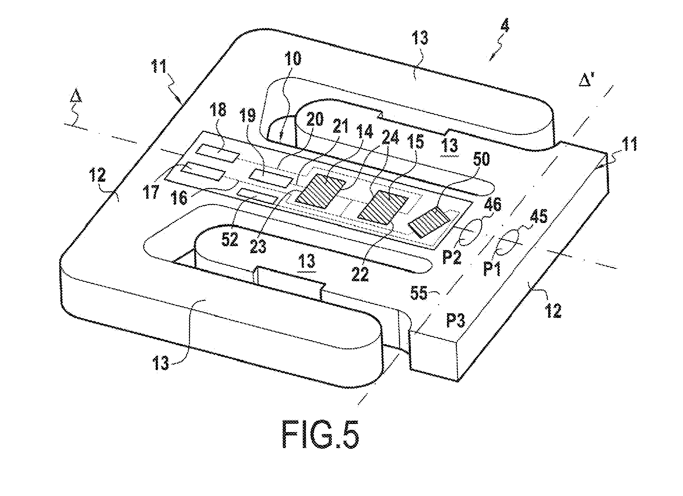

Selon une variante de l'invention, il est proposé d'affiner plus encore les mesures effectuées par chacun des capteurs de poids 4. À cet effet, chaque capteur de poids 4 comprend, comme le montre la figure 5, une troisième jauge extensométrique résistive 50. Cette troisième jauge 50 est adaptée pour mesurer les déformations du corps d'épreuve selon une deuxième direction de mesure ou non parallèle à l'axe longitudinal Δ. La troisième jauge extensométrique résistive 50 sera disposée de manière à être sensible à la torsion du corps d'épreuve 10. Les moyens de raccordement électrique du capteur de poids 4 seront adaptés pour permettre un raccordement de cette troisième jauge extensométrique à l'unité électronique de mesures 3. À cet effet, l'un des pôles de la jauge en extensométrique 50 est relié au contact de masse 17 tandis que l'autre pôle de la jauge extensométrique 50 est relié à un troisième contact polaire 52 distincts des contacts polaires 18 et 19.

En partant de l'hypothèse que la valeur de la résistance électrique de chaque jauge extensométrique répond à une loi du type :

$$R(p;x;y) = a + bp + cpx + dpy$$

où :

- p est la charge appliquée

- y la projection sur un axe perpendiculaire axe Δ du point d'application de la charge

- P.x est le moment de la force P suivant l'axe longitudinal

- P.y est le moment de la force P suivant l'axe perpendiculaire à Δ

et dans la mesure où y = 0 pour les points d'application P1 et P2, il est alors nécessaire de procéder à une mesure d'étalonnage complémentaire pour laquelle la charge étalon C sera appliquée en un point P3 qui n'est pas situé le long de l'axe longitudinal delta mais à distance de ce dernier. À cet effet, il est aménagé dans le capteur 4 une autre cavité 55 correspondant à un autre point d'application P3 dont la projection sur un axe Δ' perpendiculaire à l'axe Δ possède, la valeur Y3.

Ainsi la mesure à vide permet d'obtenir la valeur R50(0 ;0) de la résistance électrique de la troisième jauge extensométrique 50 à vide tandis que les trois mesures pendant l'application de la charge étalon C aux points P1, P2 et P3 permettent d'obtenir les valeurs de la résistance électrique de la troisième jauge extensométrique en charge respectivement R50(C;P1), R50(C;P2) et R50 (C;P3). Il est donc obtenu pour la troisième jauge extensométrique 50 un système de trois équations à trois inconnues. L'unité 34 résoudra ce système puis l'inversera pour obtenir les 9 coefficients d'une loi de variation de la résistance électrique de la troisième jauge extensométrique en fonction du poids et de la distance du point d'application par rapport à l'axe longitudinal Δ du corps d'épreuve 10.

La mise en oeuvre d'un tel capteur de poids à trois jauges extensométriques résistives permet alors de corriger les erreurs axiales et de torsion de ce capteur.

A la fin des procédures d'étalonnage telles que décrites ci-dessus, les coefficients déterminés peuvent être associés à chaque capteur de poids étalonnés dans le cadre d'un enregistrement appartenant à une base de données et mettant en oeuvre un identifiant du capteur de poids associé aux coefficients déterminés. Il peut également être envisagé d'inscrire ou d'enregistrer directement sur le capteur de poids les valeurs des coefficients calculés soit de façon claire et directement intelligible par un utilisateur soit par l'intermédiaire d'un code graphique tel qu'un code-barres ou un code du type Datamatrix. Il est également possible d'enregistrer les valeurs des coefficients déterminés en cours d'étalonnage au cours de l'étalonnage dans une mémoire 60 électronique ou magnétique intégrée au capteur. Le marquage des coefficients et/ou la mémoire 60 forment alors des moyens de fourniture des coefficients déterminés lors de l'étalonnage.

Selon les exemples décrits précédemment chaque capteur comprend plus d'une jauge extensométrique. Toutefois conformément à l'invention il pourrait être envisagé de munir chaque capteur d'une seule jauge extensométrique résistive.

Bien entendu diverses autres modifications peuvent être apportées au capteur de poids, à l'appareil électronique de pesée et au procédé d'étalonnage dans le cadre des revendications annexées.

## Revendications

**1.** Procédé d'étalonnage d'un capteur de poids (4) comprenant un corps d'épreuve (10) de forme allongée équipé d'exclusivement deux ou trois jauges extensométriques résistives (14,15) de mesure de la déformation du corps d'épreuve (10), procédé **caractérisé en ce qu'**il comprend les étapes suivantes :

- mesure à vide de la valeur de la résistance électrique de chaque jauge extensométrique résistive (14,15) du capteur en fonction du temps de charge ou décharge d'un condensateur de capacité connue au travers de la jauge extensométrique mesurée,
- une application d'une charge étalon (C) au capteur de poids (4),
- mesure, sous charge étalon (C), de la valeur de la résistance électrique de chaque jauge extensométrique résistive (14,15) du capteur en fonction du temps de charge ou décharge d'un condensateur de capacité connue au travers de la jauge extensométrique mesurée,
- détermination, en fonction des mesures des résistances électriques à vide et sous charge étalon (C), des coefficients d'une loi de variation de la valeur de la résistance électrique de chaque jauge extensométrique en fonction du poids appliqué et/ou des coefficients d'une loi de détermination du poids en fonction de la valeur de la résistance électrique de chaque jauge extensométrique résistive (14,15).

**2.** Procédé d'étalonnage selon la revendication 1, **caractérisé en ce qu'**il comprend les étapes suivantes :

- une première application d'une charge étalon (C) en un premier point (P1) connu du capteur de poids (4),
- une mesure, sous charge étalon (C) au premier point (P1), de la valeur de la résistance électrique de chaque jauge extensométrique résistive (14,15) du capteur en fonction du temps de charge ou décharge d'un condensateur de capacité connue au travers de la jauge extensométrique mesurée,
- une deuxième application d'une charge étalon (C) en un deuxième point (P2) connu du capteur de poids (4),

- une mesure, sous charge étalon (C) au deuxième point (P2), de la valeur de la résistance électrique de chaque jauge extensométrique résistive (14,15) du capteur en fonction du temps de charge ou décharge d'un condensateur de capacité connue au travers de la jauge extensométrique mesurée.

3. Procédé d'étalonnage selon la revendication 2, **caractérisé en ce qu'**il comprend les étapes suivantes :

- une troisième application d'une charge étalon (C) en un troisième point (P3) connu du capteur de poids (4),
- une mesure, sous charge étalon (C) au troisième point (P3), de la valeur de la résistance électrique de chaque jauge extensométrique résistive (14,15) du capteur en fonction du temps de charge ou décharge d'un condensateur de capacité connue au travers de la jauge extensométrique mesurée.

4. Procédé d'étalonnage selon l'une des revendications 1 à 3, **caractérisé en ce que** chaque application d'une charge étalon (C) est effectuée en un point (P1,P2) associé à des moyens d'identification (45,46,55) incorporés au capteur de poids (4).

5. Procédé d'étalonnage selon l'une des revendications 1 à 4, **caractérisé en ce qu'**il comprend une étape d'enregistrement des coefficients déterminés en relation avec le capteur (4) étalonné.

6. Capteur de poids (4) comprenant :

- un corps d'épreuve (10) de forme allongée équipé d'exclusivement deux ou trois jauges extensométriques résistives (14,15) de mesure de la déformation du corps d'épreuve (10),
- et des moyens (17,18,19,52) de raccordement électrique de chaque jauge extensométrique (14,15,50) à une unité électronique de mesure, **caractérisé en ce qu'**il comprend des moyens d'identification (45,46,55) d'au moins un point (P1,P2,P3) d'application d'une charge étalon (C) dans le cadre d'un processus d'étalonnage du capteur visant à déterminer des caractéristiques de chaque jauge extensométrique (14,15,50).

7. Capteur de poids (4) selon la revendication 6, **caractérisé en ce qu'**il comprend des moyens d'indentification (45,46) de deux points distincts (P1,P2) d'application d'une charge étalon (C).

8. Capteur de poids selon la revendication 6 ou 7, **ca-**

**ractérisé en ce que** les moyens d'identification (45,46,55) comprennent pour chaque point d'application (P1,P2,P3) au moins une cavité ou présentent un repérage graphique aménagé dans ou sur le corps du capteur.

9. Capteur selon l'une des revendications 6 à 8, **caractérisé en ce qu'**il comprend au moins une jauge extensométrique résistive (14,15) de mesure de la déformation du corps d'épreuve (10) selon une direction de mesure parallèle à un axe longitudinal du corps d'épreuve (10).

10. Capteur selon la revendication 9, **caractérisé en ce qu'**il comprend au moins deux jauges extensométriques résistives de mesure de la déformation du corps d'épreuve (10) selon une direction de mesure parallèle à l'axe longitudinal (Δ) du corps d'épreuve (10).

11. Capteur selon l'une des revendications 6 à 10, caractérisé ce qu'il comprend au moins une jauge extensométrique résistive (50) de mesure de la déformation du corps d'épreuve (10) selon une deuxième direction de mesure non parallèle à l'axe longitudinal (Δ) du corps d'épreuve (10).

12. Capteur selon l'une des revendications 6 à 10, **caractérisé en ce qu'**il comprend des moyens (60) de fourniture de coefficients de mesure déterminés par le procédé d'étalonnage selon la revendication 5.

13. Appareil électronique de pesée comprenant :

- au moins un plateau de mesure (1),
- au moins un socle (2),
- une unité électronique de mesure (3),
- au moins trois capteurs de force (4) incluant deux ou trois jauges extensométriques résistives qui sont interposés entre le plateau de mesure et le socle et qui sont équipés de moyens (17,18,19,52) de raccordement électrique des jauges extensométriques à l'unité électronique de mesure (3), **caractérisé en ce que** chaque capteur de force (4) est constitué par un capteur de poids (4) selon l'une des revendications 6 à 12 et **en ce que** l'unité électronique de mesure (3) est adaptée pour déterminer la valeur de la résistance électrique de chacune des jauges extensométriques des capteurs en fonction du temps de charge ou décharge d'un condensateur de capacité connue au travers des jauges extensométriques et pour déterminer en fonction des valeurs de résistance déterminées la valeur de la charge appliquée sur le plateau de mesure.

14. Appareil électronique de pesée selon la revendication 13, **caractérisé en ce que** l'unité électronique de mesure (3) est adaptée pour mesurer la résistance de chaque jauge extensométrique de chaque capteur de poids (4) indépendamment des résistances des autres jauges extensométriques.

15. Appareil électronique de pesée selon la revendication 13 ou 14, **caractérisé en ce que** l'unité électronique de mesure (3) comprend au moins une unité de mémoire (49) adaptée pour enregistrer les coefficients de mesure de chaque jauge extensométrique de chaque capteur de poids (4) déterminés dans le cadre du procédé selon l'une des revendications 1 à 5.

FIG.1

FIG.2

FIG.3

FIG.4

FIG.5

**14**

**Py**

**15**

**I/O**

**EEPROM**

**TDC**

**MCU**

Vcc

**3**

Afficheur

50

51

52

Fig. 6

Europäisches
Patentamt

European
Patent Office

Office européen
des brevets

# RAPPORT DE RECHERCHE EUROPEENNE

Numéro de la demande

EP 11 30 5806

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 0 153 121 A2 (RELIANCE ELECTRIC CO [US] METTLER TOLEDO INC [US]) 28 août 1985 (1985-08-28) * abrégé; revendications 1,13,14; figures 1,2,7 * | 1-15 | INV. G01G23/01 |
| X | EP 0 295 067 A2 (TOLEDO SCALE CORP [US] METTLER TOLEDO INC [US]) 14 décembre 1988 (1988-12-14) * page 5, ligne 10 - ligne 45; revendication 1; figure 3 * | 1-15 | |
| A | EP 2 192 377 A1 (BUNDESANSTALT FUER MATERIALFOR [DE]) 2 juin 2010 (2010-06-02) * abrégé; revendication 1 * | 1-15 | |
| A | US 2003/030451 A1 (BRAUN AUGUSTIN [DE]) 13 février 2003 (2003-02-13) * alinéas [0019], [0020]; revendication 1 * | 1-15 | |

DOMAINES TECHNIQUES RECHERCHES (IPC)

G01G

Le présent rapport a été établi pour toutes les revendications

| Lieu de la recherche | Date d'achèvement de la recherche | Examinateur |
|---|---|---|
| La Haye | 3 octobre 2011 | Pugno, Roberto |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 11 30 5806

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

03-10-2011

| Document brevet cité au rapport de recherche | | Date de publication | Membre(s) de la famille de brevet(s) | | Date de publication |
|---|---|---|---|---|---|
| EP 0153121 | A2 | 28-08-1985 | AU | 579135 B2 | 17-11-1988 |
| | | | AU | 3865485 A | 22-08-1985 |
| | | | BR | 8500620 A | 24-09-1985 |
| | | | CA | 1234589 A1 | 29-03-1988 |
| | | | DE | 3582340 D1 | 08-05-1991 |
| | | | JP | 60247120 A | 06-12-1985 |
| EP 0295067 | A2 | 14-12-1988 | AU | 594619 B2 | 08-03-1990 |
| | | | AU | 1618888 A | 15-12-1988 |
| | | | BR | 8802844 A | 03-01-1989 |
| | | | CA | 1304760 C | 07-07-1992 |
| | | | CN | 88103475 A | 28-12-1988 |
| | | | DE | 3889253 D1 | 01-06-1994 |
| | | | DE | 3889253 T2 | 08-12-1994 |
| | | | JP | 1006827 A | 11-01-1989 |
| | | | US | 4799558 A | 24-01-1989 |
| EP 2192377 | A1 | 02-06-2010 | DE | 102008059879 A1 | 10-06-2010 |
| US 2003030451 | A1 | 13-02-2003 | DE | 10119080 A1 | 14-11-2002 |
| | | | EP | 1251357 A1 | 23-10-2002 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008009794 A
- EP 0153121 A
- EP 0295067 A
- US 20030030451 A
- EP 1251357 A
- US 2003030451 A
- US 6690183 B